19 Europäisches Patentamt

European Patent Office

Office européen des brevets

11 Veröffentlichungsnummer: **0 248 218 B1**

12 **EUROPÄISCHE PATENTSCHRIFT**

45 Veröffentlichungstag der Patentschrift: **08.07.92**

51 Int. Cl.5: **G01N 15/08**

21 Anmeldenummer: **87106444.0**

22 Anmeldetag: **05.05.87**

54 **Verfahren zur Bestimmung des Blaspunktes bzw. der grössten Pore von Membranen oder Filterwerkstoffen.**

30 Priorität: **27.05.86 DE 3617724**

43 Veröffentlichungstag der Anmeldung:
**09.12.87 Patentblatt 87/50**

45 Bekanntmachung des Hinweises auf die
Patenterteilung:
**08.07.92 Patentblatt 92/28**

84 Benannte Vertragsstaaten:
**DE FR GB IT NL**

56 Entgegenhaltungen:
**DE-A- 3 147 421**
**DE-A- 3 306 647**
**DE-U- 8 212 094**
**GB-A- 109 074**
**GB-A- 1 568 968**

73 Patentinhaber: **Akzo N.V.**
**Postbus 186 Velperweg 76**
**NL-6800 LS Arnhem(NL)**

72 Erfinder: **Reichelt, Gert, Dr.**
**Öder Strasse 21**
**W-5600 Wuppertal 2(DE)**

74 Vertreter: **Fett, Günter**
**Akzo Patente GmbH Kasinostrasse 19 - 23**
**W-5600 Wuppertal 1(DE)**

EP 0 248 218 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Gegenstand der vorliegenden Erfindung ist ein Verfahren zur Bestimmung des Blaspunktes bzw. der größten Pore von Membranen oder Filterwerkstoffen, welche in einem Behälter angeordnet sind und diesen Behälter in einen ersten und zweiten Raum unterteilen, bei dem der erste Raum mit Gas, der zweite Raum und die Poren der Membran bzw. des Filterwerkstoffes mit einer die Membran bzw. den Filterwerkstoff benetzenden Flüssigkeit gefüllt werden, anschließend der Druck im ersten Raum, dem Gasraum, vom Normaldruck ausgehend solange über die Zeit erhöht wird, bis mindestens der Druck im Gasraum festgestellt wird, bei welchem das Gas die Flüssigkeit aus der größten Pore der Membran bzw. des Filterwerkstoffes verdrängt, und durch welchen aufgrund des dabei herrschenden Gasraumdruckes der Blaspunkt festgelegt ist, bzw. durch welchen die Querschnittsdimension der größen Pore berechnet werden kann.

Derartige Verfahren sind beispielsweise aus dem DE-GM 82 12 094 bekannt. Der Druck im Gasraum, bei dem das Gas die Flüssigkeit aus der größten Pore der Membran bzw. des Filterwerkstoffes verdrängt, wird bei dem bekannten Verfahren durch Messung des Differenzdruckes zwischen Flüssigkeitsraum und Umgebung bestimmt, wobei die zeitliche Änderung dieses Differenzdruckes als Maß für die Durchflußmenge des Gases durch die Poren benutzt wird. Bei größeren Poren kann auch die Durchflußmenge direkt gemessen werden (ASTM F 316-70), bzw. visuell das Aufsteigen von Blasen beobachtet werden (ASTM 128-61).

Bei den o.g. bekannten Verfahren ist jedoch, wie in der DE-PS 33 06 647 erläutert, beobachtet worden, daß bei Größerwerden der zu prüfenden Membranfläche und der in dieser Membran vorliegenden Porendurchmesser schon vor Erreichen des durch den Blaspunkt definierten Druckes eine bestimmte Gasdurchflußmenge festgestellt werden kann, so daß das Meßergebnis hinsichtlich des Blaspunktes und der größten Pore verfälscht ist. Diese Durchflußmenge kann beispielsweise von einem Diffusionsfluß herrühren, welcher ursächlich mit der dem Partialdruck proportionalen Löslichkeit von Gasen in Flüssigkeiten und dem daraus folgenden Konzentrationsgradienten der Gasmoleküle in den Poren der Membran zusammenhängt. Nach dem in der DE-PS 33 06 647 beschriebenen Verfahren wird diese unerwünschte Erscheinung zwar verhindert, doch ist die Anwendung des dort beschriebenen Verfahrens sehr zeitaufwendig, so daß es nur unter großem Personalaufwand möglich ist, die für eine Produktionskontrolle erforderliche Anzahl von Membranen oder von Membranmodulen einer Überprüfung zu unterziehen.

Aus der DE-OS 31 47 421 ist ein Verfahren zum Nachweis von sich in einer Flüssigkeit bewegenden Blasen bekannt, bei dem in der Blasenbahn ein Hindernis aus schalleitendem Material angebracht wird, gegen welches die Blasen stoßen können. Der dadurch an dem Hindernis erzeugte Schallimpuls wird auf einen Schallaufnehmer übertragen, in ein elektrisches Schallsignal umgewandelt und elektronisch verarbeitet. Dieses bekannte Verfahren ist jedoch nicht geeignet, eine einzige, nämlich die erste aus einer Pore austretende, Gasblase zuverlässig und sicher anzuzeigen.

Aufgabe der vorliegenden Erfindung ist es nun, ein besonders einfaches, aber sicheres Verfahren der eingangs genannten Art zur Verfügung zu stellen, mit welchem unabhängig von der zu prüfenden Membranfläche bzw. Filterwerkstoff-Fläche und unabhängig von der Porengröße stets ausreichend genaue Werte des Blaspunktes und des größten Porendurchmessers ermittelt werden können. Speziell soll auch ein Verfahren zur Verfügung gestellt werden, mit welchem bei ganzen Modulen, ja sogar bei Membranen oder Filterwerkstoffen, die bereits in ihr Gehäuse eingebaut sind, Blaspunkt und größter Porendurchmesser bestimmt werden können.

Diese Aufgabe wird bei dem eingangs genannten Verfahren dadurch gelöst, daß während der zeitlichen Erhöung des Gasraumdruckes die Schallintensität im Flüssigkeitsraum mit einem Mikrofon gemessen und der Gasraumdruck bestimmt wird, bei dem eine sprunghafte Erhöhung der Schallintensität feststellbar ist.

In der Regel wird hierzu ein Diagramm erstellt, in welchem die Schallintensität über dem hierzu gemessenen Gasraumdruck dargestellt wird. Hierbei stellt man fest, daß zunächst bei niedrigen Gasraumdrücken die Schallintensität (Geräuschpegel) gleichmäßig groß ist. Es ist nun festgestellt worden, daß bei Erreichen des zum Blaspunkt gehörenden Druckes die Schallintensität sprunghaft ansteigt.

Dieser sprunghafte Anstieg kann je nach Porenverteilung stetig oder unstetig erfolgen. Erfindungsgemäß ist festgestellt worden, daß der zum Blaspunkt gehörige Gasraumdruck immer dann erreicht ist, wenn die sprunghafte Erhöhung der Schallintensität auftritt.

Werden die Membranen oder Filterwerkstoffe in eine Prüfvorrichtung untersucht, wie sie beispielsweise in dem DE-GM 82 12 094 beschrieben ist, wird anstelle der dort beschriebenen Differenzdruckmessung nunmehr im Flüssigkeitsraum ein in der Regel wasserdichtes Mikrofon eingebaut, dessen Signale entsprechend verstärkt und gefiltert werden, bevor diese aufgezeichnet werden.

Bei der Durchführung des erfindungsgemäßen Verfahrens, welches sehr einfach uns schnell durchführbar ist, sollten allerdings folgende Punkte Beachtung finden:

- Da bei der Durchführung der Blaspunktmessung allgemein sich infolge des in jeder Flüssigkeit enthaltenen Gases Gasblasen bilden können, soll das Mikrofon nicht in einem Bereich angeordnet werden, in welchem solche Gasblasen aufsteigen können.

- Das Meßgefäß wird zweckmäßigerweise gegen äußere Störeinflüsse (Trittschall, Gespräche u.s.w.) abgeschirmt. Die äußeren Störeinflüsse können wirksam auch dadurch verringert werden, daß die Messung der Schallintensität im Ultraschallbereich, d.h. bei Frequenzen oberhalb von 20 kHz, durchgeführt wird. Eine schallabsorbierende Isolierung um das Meßgefäß ist zu empfehlen.

- Das Meßgefäß soll aus einem Material bestehen, bei welchem die bei der Schallreflexion an der Gefäßwand entstehenden Verluste besonders klein gehalten werden können. Als Material für das Meßgefäß hat sich Glas oder Metall bestens bewährt.

- Um den geringfügigen Einfluß der Meßgefäßwand weiter zu reduzieren, sollte der Abstand gegenüberliegender Wände mindestens 10 cm betragen.

- Es ist dafür Sorge zu tragen, daß die Membranen bzw. Filterwerkstoffe gut benetzt sind. Bei großen Membran- bzw. Filterwerkstoff-Flächen hat es sich als Vorteil herausgestellt, wenn diese zunächst evakuiert und dann langsam beflutet werden. Hierbei werden vor der Befüllung der Poren mit der benetzenden Flüssigkeit die Poren durch Anlegen eines Unterdruckes entleert. Werden die Membranen bzw. Filterwerkstoffe schlecht benetzt, können Lufteinschlüsse auftreten. Hierdurch wird bei Durchführung des erfindungsgemäßen Verfahrens ein relativ hoher Untergrundpegel ausgelöst.

Werden Membranen oder Filterwerkstoffe getestet, die bereits in ein festes Gehäuse eingebettet sind, kann das erfindungsgemäße Verfahren dadurch durchgeführt werden, daß die Membran im Gehäuse in eine Flüssigkeit, beispielsweise Wasser, eingetaucht wird, wobei das Mikrofon nunmehr in dieser Flüssigkeit angeordnet wird. Diese Anordnung kann immer dann gewählt werden, wenn der Schall bzw. Ultraschall die Gehäusewand durchdringen kann. Auf diese Weise ist eine wirksame und einfache Produktionskontrolle für Stoffaustauschermodule bzw. von bereits im Gehäuse eingebetteten Membranen möglich. Es ist ermittelt worden, daß Poren nach dem erfindungsgemäßen Verfahren gemessen werden können, deren Fläche 1000 mal größer ist als die Fläche der Proben, welche nach der im DE-GM 82 12 094 beschriebenen Methode mit der erforderlichen Genauigkeit gemessen werden können.

Die Erfindung wird anhand der nachfolgenden Figuren näher erläutert.

Es zeigen:

Figur 1 schematisch eine Anordnung zur Durchführung des erfindungsgemäßen Verfahrens,

Figur 2 ein bei Durchführung des erfindungsgemäßen Verfahrens erstelltes Diagramm.

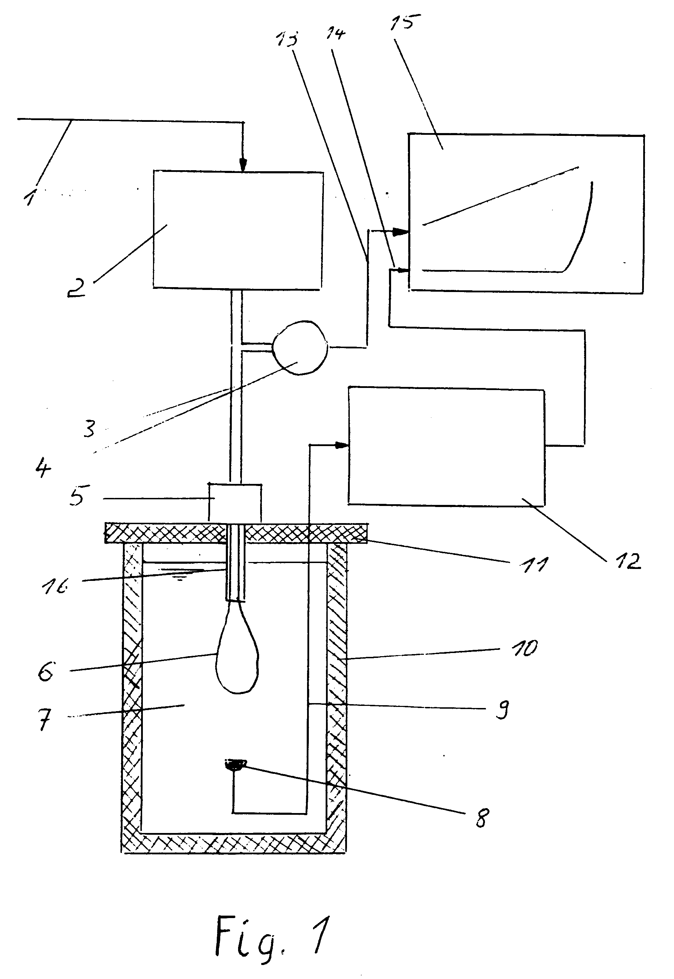

In Figur 1 ist schematisch eine Anordnung zur Durchführung des erfindungsgemäßen Verfahrens dargestellt. Die Probe 6, die im gezeigten Beispiel eine Hohlfadenmembran darstellt, ist in eine Halterung 16 eingebettet. Halterung 16 sowie die freien Enden der Hohlfadenmembran 6 enden in einem Raum 5. Im vorliegenden Fall bilden Raum 5 und der Innenhohlraum der Hohlfadenmembran den Gasraum, der über die Leitung 3 mit einer Drucksteuerung 2 verbunden ist, welche das über die Leitung 1 zugeführte Gas, beispielsweise Stickstoff, mit dem jeweils gewünschten Druck, der über die Zeit erhöht wird, liefert. Mit der Leitung 3 ist ein Feindruckmeßgerät 4 gekoppelt, dessen Ausgangssignale über die Leitung 13 einen Y-t-Schreiber, welcher das Drucksignal über der Zeit aufzeichnet, übermittelt werden.

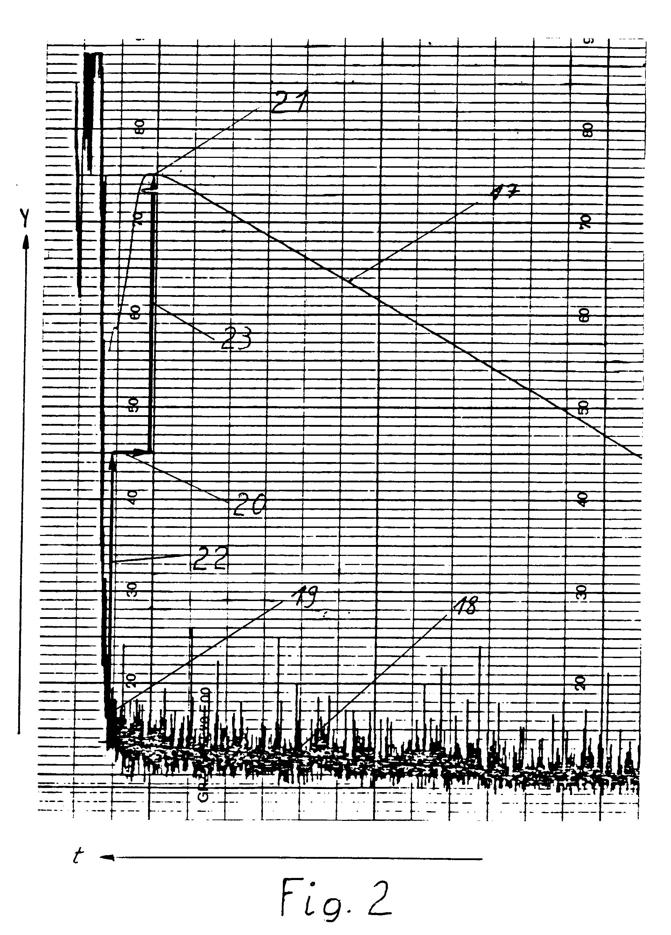

Die Probe 6 ist in Flüssigkeit 7 eingetaucht, welche in ein Gefäß eingefüllt ist. Das Gefäß ist mit einer Schallisolierung 10 ummantelt. Gleichzeitig ist das Gefäß mit einer Schallisolierung 11 als Deckel nach oben abgeschlossen. Unterhalb der Probe 6 ist ein Mikrofon, beispielsweise ein wasserdichter piezoelektrischer Quarzsensor, angeordnet, dessen Signale über die Leitung 9 einer Recheneinheit 12 zugeführt werden. In dieser Recheneinheit 12 werden die vom Mikrofon 8 kommenden Signale hinsichtlich der Frequenz gefiltert (beipielsweise zur Ausnutzung der durch die Eigenfrequenz des verwendeten Mikrofons resultierenden Verstärkung), elektrisch verstärkt und gleichgerichtet. Die Filterung ist auch deshalb erforderlich, um Geräusche aus eventuellen Turbulenzen in der Meßflüssigkeit zu unterdrücken. Die verstärkten und gefilterten Signale werden über eine Leitung 14 ebenfalls dem Y-t-Schreiber 15 zugeleitet, der parallel zum Drucksignal auch das Signal der Schallintensität über der Zeit aufzeichnet. Wie ein solches Diagramm aussehen kann, ist in Figur 2 dargestellt.

Im Protokoll des Y-t-Schreibers gemäß Figur 2 ist die Zeit in Richtung des Pfeiles t und der Gasraumdruck sowie die Schallintensität in Richtung des Pfeiles Y aufgetragen.

Während die Kurve des Gasraumdruckes 17 ansteigt, bewegt sich die Kurve der durchschnittlichen Schallintensität 18 längs einer Geraden, die jedoch in Punkt 19 sprunghaft ansteigt. An diesem Punkt 19 ist hinsichtlich des Gasraumdruckes der zum Blaspunkt gehörige Druck 21 erreicht. Die Zuordnung erfolgt über die Pfeile 22, 20 und 23, wobei über den Korrekturpfeil 20 der geräteeigene Zeitversatz zwischen den beiden Kurven 17 und 18 eliminiert wird. Die nach dem Punkt 21 abfallende Linie der Durckkurve 17 rührt daher, daß durch die Erhöhung der Schallintensität in Punkt 19 die Drucksteuerung 2 abgeschaltet wurde.

Das erfindungsgemäße Verfahren ist besonders wirtschaftlich, wenn Membran- oder Filterflächen von mehr als 0,1 m² getestet werden sollen. Bei Membran- oder Filterflächen mit 2,4 oder 8 m² lassen sich Blaspunkt und größter Porendurchmesser gut feststellen. Der maximale Porendurchmesser $d_{max}$ läßt sich aus dem zum Blaspunkt gehörigen Gasraumdruck $P_B$ nach der Formel

$$d_{max} = \sigma_B / P_B$$

berechnen. Hierbei ist $\sigma_B$ eine Konstante, die hauptsächlich der benetzenden Flüssigkeit zu eigen ist. Die Werte für $\sigma_B$ betragen beispielsweise bei 25°C für Isopropanol 0,611 $\mu$m·bar und für $H_2O$ 2.07 $\mu$m·bar.

## Patentansprüche

1. Verfahren zur Bestimmung des Blaspunktes bzw. der größten Pore von Membranen (6) oder Filterwerkstoffen, welche in einem Behälter angeordnet sind und diesen Behälter in einen ersten und zweiten Raum unterteilen, bei dem der erste Raum (5) mit Gas, der zweite Raum und die Poren der Membran (6) bzw. des Filterwerkstoffes mit einer die Membran (6) bzw. den Filterwerkstoff benetzenden Flüssigkeit (7) gefüllt werden, anschließend der Druck im ersten Raum (5), dem Gasraum, vom Normaldruck ausgehend solange über die Zeit erhöht wird, bis mindestens der Druck im Gasraum (5) festgestellt wird, bei welchem das Gas die Flüssigkeit (7) aus der größten Pore der Membran (6) bzw. des Filterwerkstoffes verdrängt, und durch welchen aufgrund des dabei herrschenden Gasraumdruckes der Blaspunkt festgelegt ist, bzw. durch welchen die Querschnittsdimension der größten Pore berechnet werden kann, dadurch gekennzeichnet, daß während der zeitlichen Erhöhung des Gasraumdruckes die Schallintensität (18) im Flüssigkeitsraum mit einem Mikrofon (8) gemessen und der Gasraumdruck (17) bestimmt wird, bei dem eine sprunghafte Erhöhung der Schallintensität (18) feststellbar ist.

2. Verfahren nach Anspruch 1, dadurch gekennzeichnet, daß die Messung der Schallintensität (18) im Ultraschallbereich durchgeführt wird.

3. Verfahren nach Anspruch 1 oder 2, dadurch gekennzeichnet, daß vor der Befüllung der Poren mit der benetzenden Flüssigkeit (7) die Poren durch Anlegen eines Unterdrucks entleert werden.

## Claims

1. Process for determining the bubble point or the largest pore of membranes (6) or filter materials, which are in a container and which divide said container into a first and a second chamber, wherein the first chamber (5) is filled with gas and the second chamber and the pores of the membrane (6) or of the filter material are filled with a liquid (7) which wets the membrane (6) or filter material, then the pressure in the first chamber (5), the gas chamber, is increased over a period of time from normal pressure, until at least the pressure in the gas chamber (5) at which the gas displaces the liquid (7) from the largest pore of the membrane (6) or of the filter material is established, and by means of which the bubble point is established on the basis of the prevailing gas chamber pressure, or by means of which the cross-sectional dimension of the largest pore can be calculated, characterised in that, during the increase over time of the gas chamber pressure, the sound intensity (18) in the liquid chamber is measured with a microphone (8) and the gas chamber pressure (17) is determined, in which case an abrupt increase in the sound intensity (18) is detectable.

2. Process according to claim 1, characterised in that measurement of the sound intensity (18) is carried out in the ultrasound range.

3. Process according to claim 1 or 2, characterised in that, before filling of the pores with the wetting liquid (7), the pores are emptied by the application of a vacuum.

## Revendications

1. Procédé de détermination du point de bulle ou de la dimension maximale des pores de membranes (6) ou de matériaux filtrants qui sont disposés à l'intérieur d'un récipient et qui divisent ce récipient en une première et une deuxième chambre, dans lequel on remplit la première chambre (5) avec du gaz, on remplit la deuxième chambre ainsi que les pores de la membrane (6) ou du matériau filtrant avec un liquide mouillant (7), puis on élève progressivement la pression dans la première chambre (5), c'est-à-dire la chambre à gaz, depuis la pression normale jusqu'à ce que l'on obtienne dans la chambre à gaz (5), au moins la pression à laquelle le gaz refoule le liquide (7) hors des plus grands pores de la membrane (6) ou du matériau filtrant et à l'aide de laquelle on détermine le point de bulle sur la base de la pression régnant dans la chambre à gaz ou qui permet de calculer la section des plus grands pores, caractérisé en ce qu'on mesure à l'aide d'un microphone (8) l'intensité acoustique (18) à l'intérieur de la chambre à liquide au cours de l'augmentation de la pression et on détermine la pression dans la chambre à gaz (17) pour laquelle on enregistre une augmentation brusque de l'intensité acoustique (18).

2. Procédé selon la revendication 1, caractérisé en ce qu'on effectue la mesure de l'intensité acoustique (18) dans le domaine des ultrasons.

3. Procédé selon la revendication 1 ou 2, caractérisé en ce qu'on vide les pores par application d'une pression négative avant de remplir celles-ci avec le liquide mouillant (7).

Fig. 1

Fig. 2